# EUROPÄISCHE PATENTANMELDUNG

(11) **EP 1 014 056 A2**
(43) Veröffentlichungstag der Anmeldung: **28.06.2000**
(21) Anmeldenummer: 99125546.4
(22) Anmeldetag: 21.12.1999
(51) Int. Cl.: G01J 5/06

(54) **Detektorvorrichtung**

(30) Priorität: 23.12.1998 DE 29823004 U
(71) Anmelder: CSP Cryogenic Spectrometers GmbH, 85737 Ismaning (DE)
(72) Erfinder: von Feilitzsch, Franz, Prof. Dr., 83674 Gaissach (DE); Höhne, Jens, Dr., 81667 München (DE); Jochum, Josef, Dr., 85748 Garching (DE); Schnagl, Johann, 85748 Garching (DE)
(74) Vertreter: Winter, Brandl, Fürniss, Hübner, Röss, Kaiser, Polte Partnerschaft

(57) **Zusammenfassung**

Offenbart ist eine Detektorvorrichtung mit einem Kühlsystem, das aufweist: eine erste Kühleinrichtung (20,30) zum Bereitstellen einer ersten Kühltemperatur (T_{K}), die ein zweistufiges Pulsröhrenkühlersystem aufweist, bei dem ein erster Pulsröhrenkühler (20) einen zweiten Pulsröhrenkühler (30) vorkühlt, und eine zweite Kühleinrichtung (82,83,85,86,87) zum Bereitstellen einer zweiten Kühltemperatur (T_{T}), welche tiefer als die erste Kühltemperatur (T_{K}) liegt, wobei die zweite Kühleinrichtung von der ersten Kühleinrichtung vorgekühlt wird. Ferner weist die Detektorvorrichtung eine Detektoreinrichtung (60) zum Erfassen von Teilchen, Strahlung oder Feldern mit einem auf einem Tieftemperatureffekt basierenden Sensor auf, wobei die Detektoreinrichtung an die zweite Kühleinrichtung thermisch gekoppelt ist. Dadurch wird eine Detektorvorrichtung mit einem vergleichsweise einfach aufgebauten Kühlsystem geschaffen, wobei Sensoren betrieben werden können, die eine gute Energieauflösung haben und aufgrund des minimalen vorrichtungstechnischen Aufwands des Kühlsystems an quasi beliebigen Orten einsetzbar sind.

## Beschreibung

### Technisches Gebiet

Die Erfindung betrifft eine Detektorvorrichtung gemäß Anspruch 1.

Derartige Detektorvorrichtungen mit einem auf einem Tieftemperatureffekt basierenden Sensor, der in einer ersten Kühlstufe mittels eines Pulsröhrenkühlers gekühlt wird, hat einen großen Einsatzbereich in analytischen Anwendungen, bei der Teilchen, Strahlung oder Felder mit hoher Energieauflösung und/oder hoher Zeitauflösung an beliebigen Orten untersucht werden sollen.

### Stand der Technik

Zum Kühlen von Sensoren, die auf einem Tieftemperatureffekt basieren (Kryosensoren oder Kryodetektoren), werden im Stand der Technik Kryostaten verwendet, die eine erste Kühleinrichtung und eine zweite Kühleinrichtung, die von der ersten Kühleinrichtung vorgekühlt wird, aufweisen, wobei der Sensor an die zweite Kühleinrichtung thermisch gekoppelt ist. Zur Erzeugung einer Temperatur von ungefähr 4K besteht die erste Kühleinrichtung dabei meist aus einem gekoppelten Stickstoff/Helium-Kühler. Dieser ist verfahrens- und vorrichtungstechnisch sehr aufwendig und braucht viel Platz. Des weiteren ist das benötigte flüssige Kühlmittel (Stickstoff, Helium) zum einen teuer und zum anderen nicht überall verfügbar. Aus diesem Grund ist es der Einsatz von Sensoren, die auf einem Tieftemperatureffekt basieren, für industrielle Zwecke relativ unrentabel und deshalb ungeeignet.

Aus Info-Phys-Tech Nr.6, 1996, aus VDI Technologiezentrum, Physikalische Technologien, ist eine Kältemaschine in Form eines Pulsröhrenkühlers bekannt, wobei der Pulsröhrenkühler der aufweist: ein Pulsrohr, an dessen einem Ende ein kalter Wärmetauscher, an dem Wärme von außen aufgenommen wird, vorgesehen ist, und an dessen anderem Ende ein warmer Wärmetauscher, an dem Wärme nach außen abgegeben wird, vorgesehen ist, einen Regenerator, der als Wärmezwischenspeicher dient, und einen Druckoszillator, der dazu dient, periodische Druckänderungen zu erzeugen, wobei das Pulsrohr an dem Ende, an dem der kalte Wärmetauscher vorgesehen ist, über jeweilige Leitungen über den Regenerator mit dem Druckoszillator verbunden ist, so daß eine periodische Verschiebung eines Arbeitsgases zwischen dem Pulsrohr und dem Druckoszillator ermöglicht wird.

### Darstellung der Erfindung

Es ist die Aufgabe der vorliegenden Erfindung, eine Detektorvorrichtung mit einem auf einem Tieftemperatureffekt basierenden Sensor, der mit minimalem vorrichtungs- und verfahrenstechnischem Aufwand gekühlt bzw. vorgekühlt werden kann, zu schaffen.

Diese Aufgabe wird durch eine Detektorvorrichtung gemäß der Merkmale des Anspruchs 1 gelöst.

Die Detektorvorrichtung gemäß der vorliegenden Erfindung hat ein Kühlsystem mit einer ersten Kühleinrichtung zum Bereitstellen einer ersten Kühltemperatur T_{K}, die ein zweistufiges Pulsröhrenkühlersystem aufweist, bei dem ein erster Pulsröhrenkühler einen zweiten Pulsröhrenkühler vorkühlt, und ferner mit einer zweiten Kühleinrichtung zum Bereitstellen einer zweiten Kühltemperatur T_{T}, welche tiefer als die erste Kühltemperatur T_{K} liegt, wobei die zweite Kühleinrichtung von der ersten Kühleinrichtung vorgekühlt wird. Ferner weist die Detektorvorrichtung eine Detektoreinrichtung zum Erfassen von Teilchen, Strahlung oder Feldern mit einem auf einem Tieftemperatureffekt basierenden Sensor auf, wobei die Detektoreinrichtung an die zweite Kühleinrichtung thermisch gekoppelt ist.

Durch diese Anordnung wird eine Detektorvorrichtung geschaffen, die eine gute Energieauflösung hat und aufgrund des minimalen vorrichtungstechnischen Aufwands an quasi beliebigen Orten einsetzbar ist bzw. mobil ist. Des weiteren ist der Betrieb bzw. Unterhalt der ersten Kühlstufe kostengünstig, da der Pulsröhrenkühler nur eine Zufuhr von elektrischem Strom benötigt. Die Folge davon ist, daß auch Personal eingespart werden kann, da keine Person zum Überwachen bzw. Nachfüllen von Kühlmittel bereitgestellt werden muß.

Gemäß einer vorteilhaften Ausgestaltung weist die erste Kühleinrichtung einen dritten oder weitere Pulsröhrenkühler auf. Diese sind dabei vorteilhafterweise derart angeordnet, daß sie in mehreren aufeinanderfolgenden Kühlstufen die erste Kühltemperatur T_{K} erreichen, auf die ein zu kühlendes Objekt, in diesem Fall die zweite Kühleinrichtung gekühlt werden soll. Genauer gesagt, ist unter aufeinanderfolgenden Kühlstufen zu verstehen, daß Pulsröhrenkühler zum Bereitstellen einer höheren Kühltemperatur, für welche sie optimiert sind, Pulsröhrenkühler zum Bereitstellen einer tieferen Kühltemperatur, für welche diese wiederum optimiert sind, vorkühlen. Prinzipiell kann das zu kühlende Objekt oder eine Vielzahl zu kühlender Objekte an jedem beliebigen Kaltkopf der jeweiligen Kühlstufen angeordnet werden. Es ist jedoch vorteilhaft das zu kühlende Objekt an der Kühlstufe anzuordnen, die die niedrigste Temperatur bereitstellt, d.h. bei einem zweistufigem Pulsröhrenkühlersystem, wie es oben beschrieben worden ist, an dem zweiten Pulsröhrenkühler.

Gemäß einer vorteilhaften Ausgestaltung weist jeder der Pulsröhrenkühler ein Pulsrohr auf, an dessen einem Ende ein kalter Wärmetauscher, an dem Wärme von außen aufgenommen wird, vorgesehen ist, und an dessen anderem Ende ein warmer Wärmetauscher, an dem Wärme nach außen abgegeben wird, vorgesehen ist. Des weiteren hat der Pulsröhrenkühler einen Regenerator, der als Wärmezwischenspeicher dient, und einen Druckoszillator, der dazu dient, periodische Druckänderungen zu erzeugen. Hierbei ist das Pulsrohr an dem Ende, an dem der kalte Wärmetauscher vorgesehen ist, über jeweilige Leitungen über den Regenerator mit dem Druckoszillator verbunden, so daß eine periodische Verschiebung eines Arbeitgases zwischen dem Pulsrohr und dem Druckoszillator ermöglicht wird. Im Gegensatz zu anderen mechanischen Kühlern hat der Pulsröhrenkühler die vorteilhafte Eigenschaft, daß er sehr vibrationsarm ist.

Gemäß einer weiteren vorteilhaften Ausgestaltung weist das Pulsrohr an dem Ende, an dem der warme Wärmetauscher vorgesehen ist, ferner einen Strömungswiderstand und einen Behälter zur Aufnahme eines Ballastvolumens auf.

Gemäß einer weiteren vorteilhaften Ausgestaltung weist jeder der Pulsröhrenkühler ferner eine Sekundärleitung auf, die sich von dem Ende des jeweiligen Pulsrohrs, an dem der warme Wärmetauscher vorgesehen ist, zu der Leitung zwischen dem Druckoszillator und dem Regenerator hin erstreckt und in diese mündet, wobei die Sekundärleitung einen variablen bzw. variabel einstellbaren Strömungswiderstand aufweist.

Die zweite Kühleinrichtung ist vorteilhafterweise an oder in der Nähe des kalten Wärmetauschers eines Pulsröhrenkühlers angeordnet.

Die Detektoreinrichtung kann ferner einen Absorber aufweisen, der an den Sensor thermisch gekoppelt ist und in dem einfallende Teilchen und Strahlung wechselwirken. Der Absorber kann dabei aus einem Dielektrikum oder einem Halbleiter oder einem Metall oder einem Halbmetall oder einer Halbmetallegierung oder einem Supraleiter oder aus einer Kombination der einzelnen Materialien bestehen.

Als die zweite Kühleinrichtung wird vorteilhafterweise eine Entmagnetisierungsstufe verwendet. Es kann des weiteren ein ³He/⁴He-Entmischungskühler oder ein ³He-Kühler oder eine mechanische Kühleinrichtung wie ein Helium-Kompressorkühler oder eine elektrische Kühleinrichtung wie ein Peltierelement oder eine supraleitende Tunneldiode wie eine NIS-Diode eingesetzt werden.

Gemäß einer weiteren vorteilhaften Ausgestaltung der erfindungsgemäßen Detektorvorrichtung ist das Kühlsystem Teil eines Kryostaten, in dem die Detektoreinrichtung untergebracht ist, wobei der Kryostat ferner eine Eintrittsöffnung zum Durchlassen der zu untersuchenden Teilchen und Strahlung vom Äußeren des Kryostaten in das Innere des Kryostaten zu der Detektoreinrichtung aufweist. Außerdem kann der Kryostat eine Fokussierungseinrichtung wie eine Röntgenlinse oder eine Wolter-Anordnung oder eine Fresnellinse oder fokussierende Röhrenbündel oder elektrische Fokussierungseinrichtungen/Defokussierungseinrichtungen oder magnetische Fokussierungseinrichtungen/Defokussierungseinrichtungen aufweisen.

Die in der Detektorvorrichtung verwendeten auf einem Tieftemperatureffekt basierende Sensoren, oder auch Kryodetektoren bzw. kryogene Detektoren, sind Sensoren, die durch eine Strahlungs- oder Teilchenabsorption deponierte Energie mittels eines Effektes, der nur oder insbesondere bei tiefen Temperaturen (Betriebstemperaturbereich kleiner als 20 K, vorzugsweise jedoch kleiner als < 4 K) auftritt, messen. Diese Temperaturen werden von eine Wärmesenke bereitgestellt, die an die Detektoreinrichtung, welche einen jeweiligen auf einem Tieftemperatureffekt basierenden Sensor aufweist, thermisch gekoppelt ist.

Diese Effekte können sein:
i) Temperaturerhöhung nach Energiedeposition (Kalorimeter) in einem Absorber (Dielektrikum, Metall, Supraleiter, usw.). Diese Temperaturerhöhung ist umso höher je tiefer die Ausgangstemperatur ist, da die Wärmekapazitäten bei den tiefen Temperaturen abnehmen. Je größer die Temperaturerhöhung ist, desto genauer kann aus ihr die deponierte Energie abgeleitet werden.
ii) Erzeugung von Phononen (Gitterschwingungen in einem Absorbermaterial) durch die Energiedeposition. Damit diese Gitterschwingungen möglichst stark "hervortreten", d.h., eine genaue Bestimmung der Energie (und eventuell des Ortes der Energiedeposition im Absorber) möglich ist, sollten im Ausgangszustand möglichst wenige Gitterschwingungen vorhanden sein. Je tiefer die Ausgangstemperatur, desto weniger Gitterschwingungen sind vorhanden.
iii) Erzeugung von Quasiteilchen (Aufbrechen von Cooperpaaren) in einem Supraleiter. Supraleitung ist ein Tieftemperatureffekt. Je tiefer die Übergangstemperatur zur Supraleitung, desto mehr dieser Quasiteilchen werden durch die Energiedeposition erzeugt. Je mehr der Quasiteilchen erzeugt werden, desto genauer kann die Energie bestimmt werden.
iv) Änderung der Spinausrichtung bzw. Magnetisierung in einem auf tiefe Temperaturen abgekühlten Spinsystem bestehend aus paramagnetischen Ionen aufgrund einer Energiedeposition.

Um die Temperaturerhöhung, die Gitterschwingungen, die Quasiteilchen (allgemein die Anregungen) bzw. die Änderung der Magnetisierung zu messen, gibt es verschiedene Möglichkeiten, wobei generell gilt, daß die Anregungen in einem Absorber erzeugt werden und in einem Sensor nachgewiesen werden. Sensor und Absorber können dabei identisch sein. Als Sensoren kommen in Frage:
a) Supraleitende Phasenübergangsthermometer, wie beispielsweise als Sensor in einem Mikrokalorimeter: Diese bestehen im wesentlichen aus einem Absorber, einem Thermometer (supraleitende Schicht, beispielsweise aus Wolfram, Iridium, Aluminium oder Tantal) und einer Kühleinrichtung bzw. einer Kopplung an eine Wärmesenke. Im Temperaturübergangsbereich zwischen seiner supraleitenden und normalleitenden Phase ändert das Thermometer seinen elektrischen Widerstand sehr stark in Abhängigkeit von der Temperatur, d.h., auch nach Absorption von Gitterschwingungen und Quasiteilchen.
b) Supraleitende Tunneldioden: Sie bestehen aus zwei überlappenden dünnen supraleitenden Filmen (*SIS*: Supraleiter-Isolator-Supraleiter, wobei die Filme nicht notwendigerweise aus dem gleichen Supraleiter auf beiden Seiten bestehen müssen) oder einem supraleitenden und einem normalleitenden Film (*NIS*: Normalleiter-Isolator-Supraleiter), wobei die jeweiligen Filme durch eine dünne elektrisch isolierende Barriere getrennt sind. Die Barriere ist so dünn, daß sie quantenmechanisches Tunneln von Elektronen, bzw. Quasiteilchen von der einen Elektrode zur anderen erlauben. Wird die NIS-Diode oder SIS-Diode unterhalb der Sprungtemperatur der jeweiligen Supraleiter betrieben, und ist die angelegte Spannung kleiner als die der supraleitenden Energielücke entsprechenden Spannung (NIS) bzw. kleiner als zweimal diese Spannung (SIS), so steigt der über die Barriere fließende Strom, wenn in der Tunneldiode Energie deponiert wird. Die Deposition der Energie kann durch Temperaturerhöhung, Absorption von Gitterschwingungen oder Quasiteilchen oder direkt durch Absorption von Strahlung oder Teilchen geschehen.
c) Thermistor, wie NTD-Thermometer (*NTD*: "Neutron Transmutation Doping", d.h., mit Neutronen hochdotierter Halbleiter). Diese Thermometer können zum Messen von Temperaturschwankungen verwendet werden, da bei ihnen, wie bei allen Halbleitern der Widerstand mit sinkender Temperatur zunimmt. Um zu vermeiden, daß bei sehr tiefen Temperaturen die Widerstände so hoch anwachsen, daß sie nicht mehr mit genügender Genauigkeit gemessen werden können, werden die verwendeten Halbleiter hochdotiert, wodurch ihr Widerstand abgesenkt wird.
d) Magnetische Bolometer. Diese Sensoren, die eine schwache thermische Kopplung an ein Kältebad bzw. eine Wärmesenke mit einer Temperatur vorzugsweise im Millikelvinbereich haben, umfassen eine schwache Konzentration von paramagnetischen Ionen in einem magnetischen Feld. Als derartige Ionen werden vorteilhafterweise Ionen von seltenen Erden, wie beipsielsweise von Erbium (Er³⁺), verwendet. Wenn ein kleiner Energiebetrag, beispielsweise durch elektromagnetische Strahlung, in einem derartigen Sensor deponiert wird, verursacht der Temperaturanstieg eine Änderung der Magnetisierung des von den paramagnetischen Ionen gebildeten Paramagneten, die beispielsweise unter Verwendung einer Spule, die an einen Eingang eines SQUIDs angeschlossen ist, gemessen werden kann. Vorteilhafterweise ist an das magnetische Bolometer ein Absorber thermisch gekoppelt.

Die Verwendung derartiger kryogener Sensoren bietet mehrere Vorteile. Zum einen ist eine gute Energieauflösung zu nennen, die bei 6 keV Röntgenstrahlung im Bereich von etwa 5 eV und bei 1,5 keV Röntgenstrahlung im Bereich von etwa 3 eV liegt. Neben der guten Energieauf lösung der kryogenen Sensoren ist auch deren Detektionseffizienz auch bei niedrigen Energien (kleiner als 2 keV) vorteilhaft. Es kann quasi jedes auf den Sensor einfallende Photon erfaßt und nachgewiesen werden. Außerdem kann ein vorbestimmter Energiebereich von zu analysierenden Teilchen oder Strahlung simultan erfaßt werden und es lassen sich die von den Teilchen bzw. Strahlung im Detektor erzeugten Pulse schnell auslesen, wodurch auch zeitabhängige Phänomene mit kurzer Zeitkonstante beobachtet werden können.

Zur Verbesserung der Auslesegeschwindigkeit bzw. zum Einstellen einer optimalen Betriebstemperatur des Detektoreinrichtung bzw. des Sensors, ist vorteilhafterweise eine Heizeinrichtung vorgesehen, die an die Detektoreinrichtung thermisch gekoppelt ist. Liegt die Temperatur bzw. der Temperaturbereich des Kühlsystems bzw. der zweiten Kühleinrichtung unterhalb der für den jeweiligen kryogenen Sensor optimalen Temperatur, bzw. schwankt die bereitgestellte Kühltemperatur, so läßt sich durch Regelung der durch die Heizeinrichtung dem Sensor zugeführten Energie eine optimale Betriebstemperatur einstellen. Ferner bietet die Einstellung einer Temperatur oberhalb der von der Kühleinrichtung bereitgestellten Temperatur die Möglichkeit der "aktiven Kühlung". Dabei versteht man die Wegnahme der Heizleistung bei einer in der Sensoreinrichtung stattfindenden Energiedeposition eines einfallenden Teilchens bzw. einfallender Strahlung. Durch die schnelle Rückstellung der Sensoreinrichtung auf die vorbestimmte optimale Betriebstemperatur läßt sich auf diese Weise eine Signalbeschleunigung und somit eine Verbesserung der Auslesegeschwindigkeit erzielen.

Zum Erfassen von Magnetfeldern bzw. dessen Änderungen können auch SQUIDs ("Superconducting Quantum Interference Device", supraleitende Quanten-Interferenz-Vorrichtungen) als Sensoren verwendet werden.

Die Detektoreinrichtung kann ferner eine Vielzahl von Sensoren aufweisen. Dies ist beispielsweise vorteilhaft, wenn zwei verschiedenartige Sensoren verwendet werden, deren Energieauf lösung in jeweils verschiedenen Energiebereichen unterschiedlich gut ist.

Weitere Einzelheiten, Merkmale und Vorteile der Erfindung ergeben sich aus der nachfolgenden Beschreibung bevorzugter Ausführungsformen anhand der Zeichnung.

Es zeigen:
Figur 1 eine schematische Darstellung einer erfindungsgemäßen Detektorvorrichtung, bei der die Detektoreinrichtung in einem Kryostaten untergebracht ist;
Figur 2 eine schematische Darstellung eines Pulsröhrenkühlers gemäß einer ersten Ausgestaltung;
Figur 3 eine schematische Darstellung eines Pulsrährenkühlers gemäß einer zweiten Ausgestaltung;
Figur 4 eine schematische Darstellung eines Pulsröhrenkühlers gemäß einer dritten Ausgestaltung;
Figur 5 eine schematische Darstellung eines Pulsröhrenkühlers gemäß der dritten Ausgestaltung in einer konkreteren Darstellung als in Figur 4;
Figur 6 eine schematische Querschnittsansicht einer realen Geometrie eines Pulsröhrenkühlers;
Figur 7 eine schematische Darstellung eines zweistufiges Pulsröhrenkühlersystem mit den wichtigstem Komponenten; und
Figuren 8 eine schematische Darstellung einer realen Geometrie eines als Detektoreinrichtung verwendbaren Mikrokalorimeters.

Im folgenden wird die Detektorvorrichtung gemäß der vorliegenden Erfindung beschrieben.

### Kryostat

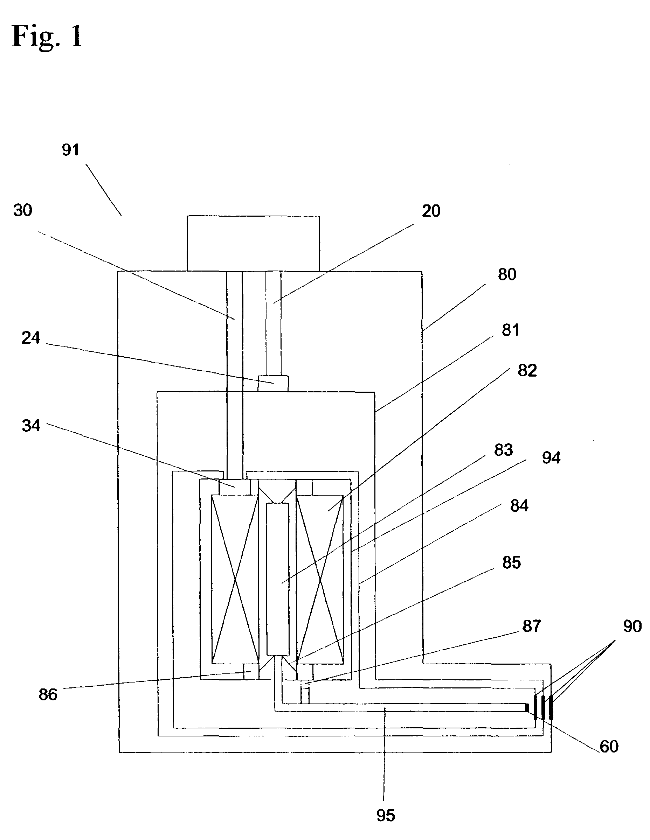

Es sei dabei zunächst auf Figur 1 verwiesen, die eine schematische Darstellung einer erfindungsgemäßen Detektorvorrichtung, bei der die Detektoreinrichtung in einem Kryostaten untergebracht ist zeigt.

Von innen nach außen betrachtet, ist die Detektoreinrichtung 60 zum Erfassen von Teilchen, Strahlung oder Felder, wie beispielsweise ein Mikrokalorimeter, über einen sogenannten Kühlfinger 95 an eine Salzpille 106 einer zweiten Kühleinrichtung hier in der Form einer (adiabatischen) Entmagnetisierungsstufe 82,83,85, 86,87, die eine Wärmesenke mit einer Temperatur T_{T} von ungefähr 30 bis 300 mK darstellt, thermisch gekoppelt. Die zweite Kühleinrichtung weist ferner einen Magnet 82 auf, der das Salz in der Salzpille 83 magnetisiert. Zur thermischen Entkopplung ist die Salzpille 83 hier beispielsweise über Kevlarfäden 85 aufgehängt, wobei die Fäden 85 durch eine Spannvorrichtung 86, beispielsweise in Form von Federn oder Materialien, die sich bei Temperaturabnahme zusammenziehen, gespannt werden. Mittels eines Wärmeschalters 87 kann während des Betriebs der Entmagnetisierungsstufe die Salzpille 83 mit dem Magnet 82 bzw. der Spannvorrichtung 86 thermisch gekoppelt werden. Die Entmagnetisierungsstufe ist dabei von einem Magnetschild 94 umgeben. Der Magnetschild 94 dient zur Abschirmung des Magneten 82 gegenüber der Umgebung. Im Betriebsmodus der Detektoreinrichtung wird der Magnet 82 bzw. dessen Feld langsam heruntergefahren, so daß die Temperatur in der Salzpille 83 konstant auf oder unterhalb der Betriebstemperatur der Detektoreinrichtung 60 bzw. deren Sensors gehalten wird. Das dabei noch vorhandene Magnetfeld muß kompensiert und abgeschirmt werden. Dazu kann die Spule des Magneten 82 bereits Kompensationsspulen aufweisen. Der Magnetschild 94 kann aus einem Supraleiter (z.B. Niob, Ta) oder aus einem Material mit hoher Magnetisierung (z.B. Kryoperm oder Vacrylux oder einer Kombination von beidem) bestehen. Am unteren Ende weist der um die Entmagnetisierungsstufe angeordnete Magnetschild 94 ein kleines Loch auf, durch das sich der Kühlfinger 95 erstreckt, der die Detektoreinrichtung 60 hält. Des weiteren sind die Entmagnetisierungsstufe und die Detektoreinrichtung 60 von einem Schild 84 umgeben, innerhalb dessen eine Temperatur T_{K} von ungefähr 4 K eingestellt ist. Diese Temperatur T_{K} wird von dem Pulsrohr 30 eingestellt, das die 2. Stufe eines als erste Kühleinrichtung eingesetzten Pulsröhrenkühlersystems darstellt. Dabei ist ein Kaltkopf 34 bzw. ein kalter Wärmetauscher 34 bzw. eine "4K-Platte" 34 mit dem Magnet 82 verbunden. Der 4K-Schild 84 ist von einem Schild 81 umgeben, innerhalb dessen eine Temperatur von ungefähr 67 K eingestellt ist. Diese Temperatur wird von einem Pulsrohr 20 eingestellt, das die erste Stufe des als erste Kühleinrichtung eingesetzten Pulsröhrenkühlersystems darstellt. Dabei ist ein Kaltkopf 24 bzw. ein kalter Wärmetauscher 24 bzw. eine "67K-Platte" 24 mit dem 67K-Schild 81 verbunden. Die übrigen Komponenten der jeweiligen Pulsröhrenkühler neben den Pulsrohren 20,30, wie der Regenerator oder der Druckoszillator, sind der Einfachheit halber in Figur 1 nicht dargestellt. Die Außenhülle des Kryostats 91 bildet ein Vakuumtopf 80, der die jeweiligen Kühleinrichtungen und die Detektoreinrichtung 60 mit Sensor und Absorber (nicht dargestellt) umgibt. Damit Strahlung vom Äußeren ins Innere des Kryostats 91 gelangen und auf die Detektorichtung 60 treffen kann, sind Eintrittsfenster 90 vorgesehen.

### Pulsröhrenkühler

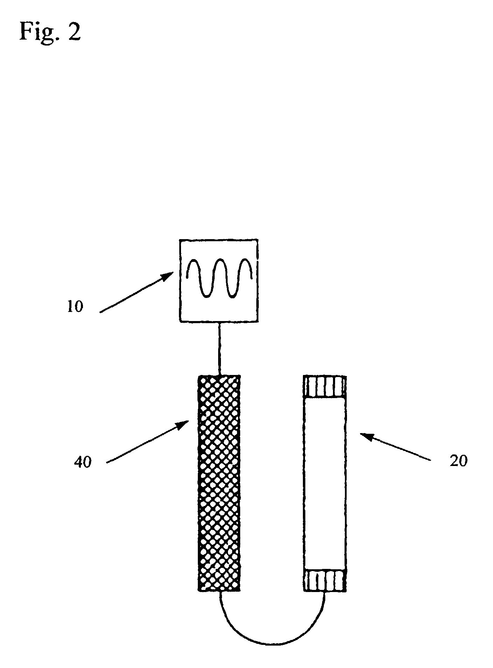

Im folgenden wird der Aufbau und die Wirkungsweise eines Pulsröhrenkühlers beschrieben. Dabei zeigt Figur 2 eine schematische Darstellung eines Pulsröhrenkühlers gemäß einer ersten Ausgestaltung. Hier, wie in den folgenden Figuren, werden gleiche Teile mit den gleichen Bezugszeichen bezeichnet.

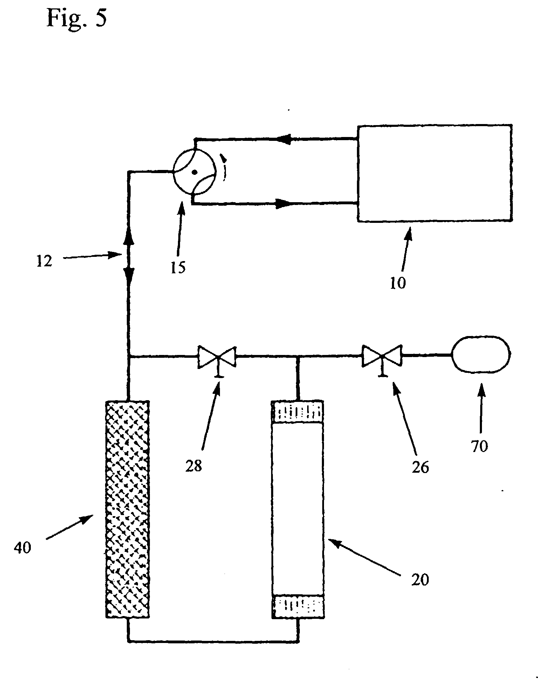

Der Kühleffekt beim Pulsröhrenkühler beruht auf der periodischen Druckänderung und Verschiebung ("Pulsieren") eines Arbeitsgases in einem dünnwandigen Zylinder mit Wärmetauschern an beiden Enden, dem sogenannten Pulsrohr 20. Das Pulsrohr 20 ist mit dem Druckozillator 10,15 über einen Regenerator 40 verbunden. Der Regenerator 40 dient als Wärmezwischenspeicher, der das vom Druckoszillator 10,15 einströmende Gas vor Eintritt in das Pulsrohr 20 abkühlt und anschließend das ausströmende Gas wieder auf Raumtemperatur erwärmt. Für diesen Zweck ist er vorteilhafterweise mit einem Material hoher Wärmekapazität gefüllt, das einen guten Wärmeaustausch mit dem strömenden Gas bei gleichzeitig geringem Durchflußwiderstand aufweist. Bei Temperaturen oberhalb 30 K verwendet man Stapel von feinmaschigern Edelstahl- oder Bronzesieben als Regeneratorfüllung. Für tiefere Temperaturen setzt man aus Gründen der hohen Wärmekapazität Bleischrot und neuerdings auch magnetische Materialien, z.B. Er-Ni-Legierungen, ein. Zur Erzeugung der Druckoszillation wird, wie es in Figur 5 gezeigt ist, ein Kompressor 10 in Kombination mit einem nachgeschalteten Rotationsventil 15 verwendet, das periodisch die Hoch- und Niederdruckseite des Kompressors mit dem Kühler verbindet. Alternativ dazu kann die Druckoszillation direkt über die Kolbenbewegung eines ventillosen Kompressors erzeugt werden.

In der ersten Ausgestaltung des Pulsröhrenkühlers ist das Pulsrohr am warmen Ende 22 geschlossen. Der Kühlprozeß läuft qualitativ wie folgt ab: In der Kompressionsphase strömt das im Regenerator 40 vorgekühlte Gas in das Pulsrohr 20 ein. Durch die Druckerhöhung wird das Gas im Pulsrohr 20 erwärmt und gleichzeitig zum warmen Wärmetauscher 22 hin verschoben, wo ein Teil der Kompressionswärme an die Umgebung abgeführt wird. Durch die anschließende Expansion erfolgt eine Abkühlung des Gases im Pulsrohr 20. Das Gas, welches das Pulsrohr 20 verläßt, ist kälter als beim Eintritt und kann daher Wärme aus dem kalten Wärmetauscher 24 und dem zu kühlenden Objekt, beispielsweise einer zweiten bzw. weiteren Kühleinrichtung, aufnehmen. Eine genauere Analyse des Prozesses in dieser Ausführungsform zeigt, daß für den Wärmetransport vom kalten 24 zum warmen 22 Ende ein Wärmeaustausch zwischen Gas und Rohrwandung erforderlich ist ("Oberflächenwärmepumpen"). Da der Wärmekontakt jedoch nur in einer dünnen Gasschicht an der Rohrwandung erfolgt, ist dieser Kühlprozeß noch nicht optimiert.

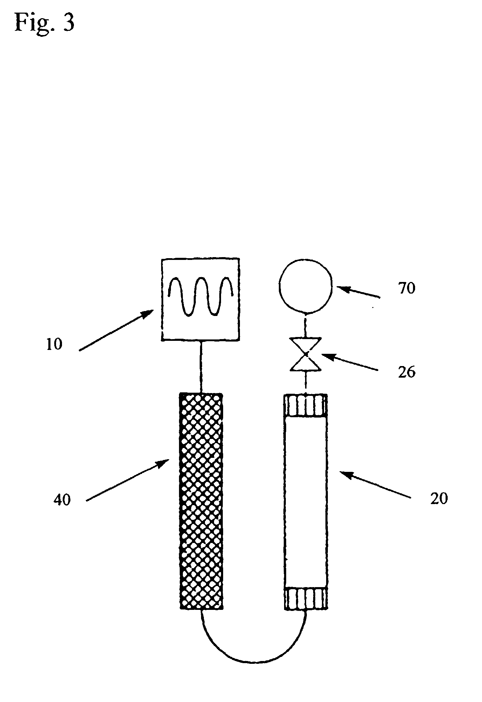

Figur 3 zeigt nun eine schematische Darstellung eines Pulsröhrenkühlers 20 gemäß einer zweiten Ausgestaltung. Hierbei ergibt sich eine wesentliche Steigerung der Effektivität durch den Anschluß eines Ballastvolumens 70 über einen Strömungswiderstand (Nadelventil) 26 am warmen Wärmetauscher 22. Zum einen strömt hier mehr Gas durch den warmen Wärmetauscher 22, das dort dann Kompressionswärme abgeben kann. Zum anderen leistet das Gas im Pulsrohr 20 Arbeit beim Verschieben von Gas in das Ballastvolumen 70, wodurch ein wesentlich höherer Kühleffekt erreicht wird.

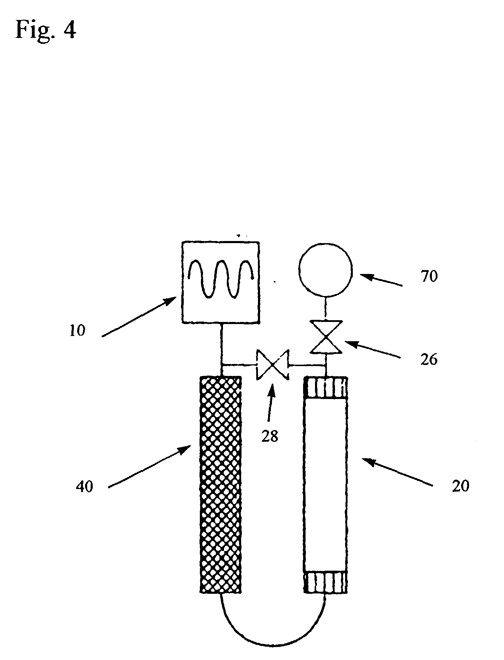

Figur 4 zeigt eine schematische Darstellung eines Pulsröhrenkühlers gemäß einer dritten Ausgestaltung, bei der sich die Effektivität des Kühlers sich weiter steigern läßt, indem der Anteil des Gasflusses, der zur Druckänderung im warmen Teil des Pulsrohres 20 nötig ist, durch einen zweiten Einlaß am warmen Ende geleitet wird. Da dieser Gasfluß nicht mehr den Regenerator 40 passiert, werden die Verluste im Regenerator 40 verringert. Außerdem stellt sich bei zweitem Einlaß (mit einem Ventil 28) eine für die Kühlung günstigere zeitliche Abfolge von Druck- und Flußvariation ein.

Figur 5 zeigt einen schematischen Gesamtaufbau eines Pulsröhrenkühlers gemäß der dritten Ausgestaltung in einer konkreteren Darstellung als in Figur 4. Dabei speist in diesem System ein kommerzieller Helium-Kompressor 10 ein motorgetriebenes Rotationsventil 15, das zur Steuerung das Heliumgasstromes dient.

Zur mechanischen Entkopplung und zur Reduzierung von elektromagnetischen Störungen können der eigentliche Kühler und das Rotationsventil über eine flexible Kunststoffleitung 12 miteinander verbunden.

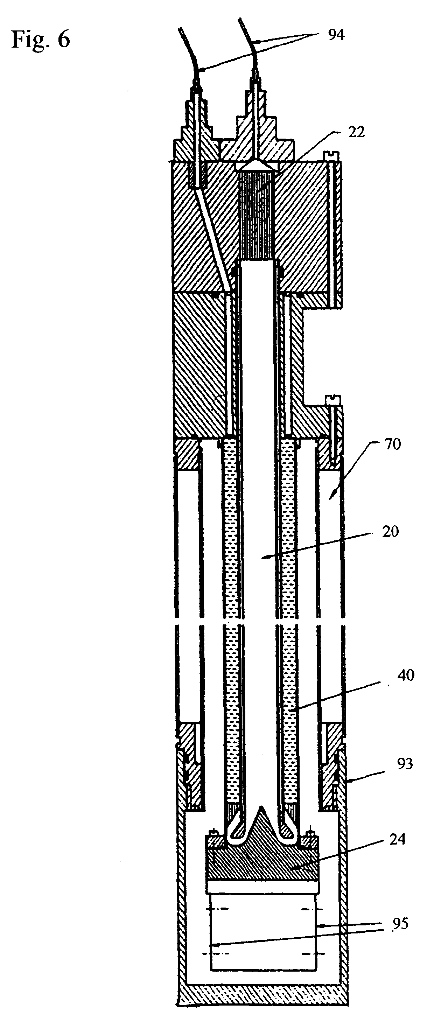

Ein reale Geometrie eines Pulsröhrenkühlers ist in einer schematischen Querschnittsansicht in Figur 6 gezeigt. Um eine möglichst schlanke Bauform zu erreichen, sind Pulsrohr 20 und Regenerator 40 koaxial angeordnet. Der warme Wärmetauscher 22 wird nur durch die Umgebungsluft gekühlt. Der Kaltkopf 24 mit konisch geformter Innenfläche zur Führung des Gasflusses dient als (kalter) Wärmetauscher 24 zwischen Objektträger für die zu kühlenden Objekte 95 und dem Arbeitsgas. Das Vakuumisoliergefäß 93 mit integriertem Ballastvolumen 70 ist im unteren Teil, der die zu kühlenden Objekte 95 umschließt, aus Plexiglas gefertigt, wodurch eine Verringerung des elektronischen Rauschens erreicht wird. Am oberen Ende des Pulsröhrenkühlers sind Gaseinlasse 94 für den warmen Wärmetauscher bzw. das Pulsrohr vorgesehen.

Neben der Verwendung eines einzelnen Pulsröhrenkühlers ist es auch möglich, zur Erzeugung besonders tiefer Temperaturen ein zweistufiges Pulsröhrenkühlersystem, wie es schon in Figur 1 gezeigt worden ist, zu verwenden.

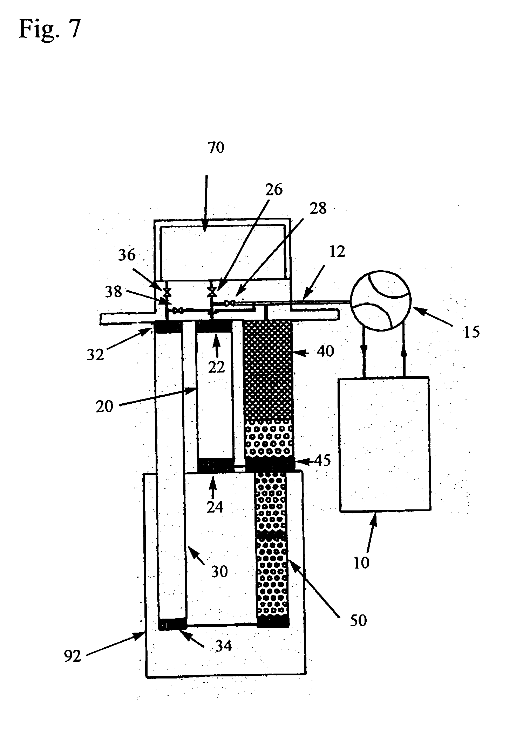

Figur 7 zeigt eine schematische Darstellung eines zweistufiges Pulsröhrenkühlersystem mit den wichtigstem Komponenten. Zur Erzeugung von Druckoszillationen ist ein Kompressor 10 an ein Rotationsventil 15 gekoppelt. Eine Leitung 12 verbindet das Rotationsventil 15 mit dem Pulsröhrenkühlersystem. Dieses weist einen Regenerator 40 der ersten Stufe und einen Regenerator 50 der zweiten Stufe auf, wobei zwischen diesen ein Flußausrichter ("flow straightener") 45 angeordnet ist. Ferner weist das Pulsröhrenkühlersystem ein erstes Pulsrohr 20 mit einem warmen Wärmetauscher 22 und einem kalten Wärmetauscher bzw. Kaltkopf 24 und ein zweites Pulsrohr 30 mit einem warmen Wärmetauscher 32 und einem kalten Wärmetauscher bzw. Kaltkopf 34 auf. Die jeweiligen warmen Wärmetauscher 22 und 32 sind über Drosselventile, beispielsweise in der Form von Nadelventilen 26 und 36, mit einem gemeinsamen Ballastbehälter bzw. Ballastvolumen 70 verbunden. Es ist ferner denkbar, daß anstelle des gemeinsamen Ballastvolumens zwei getrennte Ballastvolumina verwendet werden. Außerdem sind an den jeweiligen warmen Wärmetauschern 22 und 32 Ventile 28 und 38 für einen zweiten Einlaß vorgesehen. Der Kaltkopf 24 des ersten Pulsrohrs 20 kühlt dabei einen von einem Wärme- bzw. Strahlungsschild 92 umgebenen Bereich bis auf ungefähr maximal 50 K vor, während am Kaltkopf 34 des zweiten Pulsrohrs 30 eine Temperatur von ungefähr 2,2 bis 4,2 K bereitgestellt wird (vgl. dazu C. Wang et al.:"A two-stage pulse tube cooler operating below 4 K", Cryogenics 1997, Volume 37, Nr. 3).

Die Kühlsysteme der erfindungsgemäßen Detektorvorrichtung, die Pulsröhrenkühler aufweisen, sind aufgrund der fehlenden beweglichen Teile sehr vibrationsarm und deshalb auch besonders gut für die Kühlung von empfindlichen Sensoren wie SQUIDs geeignet.

### Detektoreinrichtung

Als Detektoreinrichtung in einer erfindungsgemäßen Detektorvorrichtung kann beispielsweise ein Mikrokalorimeter eingesetzt werden, dessen Sensor ein Phasenübergangsthermometer ist. Allgemein umfaßt dabei ein Mikrokalorimeter eine Sensoreinrichtung bestehend aus einem Thermometer, das ein supraleitendes Material mit einem eine endliche Breite aufweisenden Übergangstemperaturbereich von der normalleitenden in die supraleitende Phase aufweist, wobei die Sprungtemperatur in der Mitte des Übergangstemperaturbereichs liegt und der elektrische Widerstand des supraleitenden Materials innerhalb des Übergangstemperaturbereichs mit wachsender Temperatur ansteigt. Ferner weist das Mikrokalorimeter einen Absorber auf, der an das Thermometer thermisch gekoppelt ist und in dem einfallende Teilchen oder Strahlung wechselwirkt. Eine Kühleinrichtung ist zum Bereitstellen einer Betriebstemperatur unterhalb der Sprungtemperatur des Thermometers vorgesehen, wobei durch eine Heizeinrichtung der Temperaturarbeitspunkt des Thermometers innerhalb des Übergangstemperaturbereichs einstellbar ist. Zum Registrieren einer Widerstandsänderung aufgrund von einfallenden Teilchen oder Strahlung ist eine Ausleseelektronik, die elektrisch bzw. magnetisch mit dem Thermometer verbunden ist und den durch das Thermometer fließenden Strom erfaßt vorgesehen. Zur Minimierung der aufzubringenden Kühlleistung sind die Kühleinrichtung und die Heizeinrichtung vorteilhafterweise getrennt voneinander an die Sensoreinrichtung thermisch gekoppelt. Zur Verbesserung der Signalbeschleunigung kann die Kühleinrichtung oder die Heizeinrichtung oder beide gleichzeitig flächig mit der Sensoreinrichtung thermisch gekoppelt sein. Flächige thermische Kopplung heißt hierbei, daß die Kopplung über eine ausgedehnte Kontaktfläche und nicht nur quasi-punktförmig wie bei Bonddrähten erfolgt.

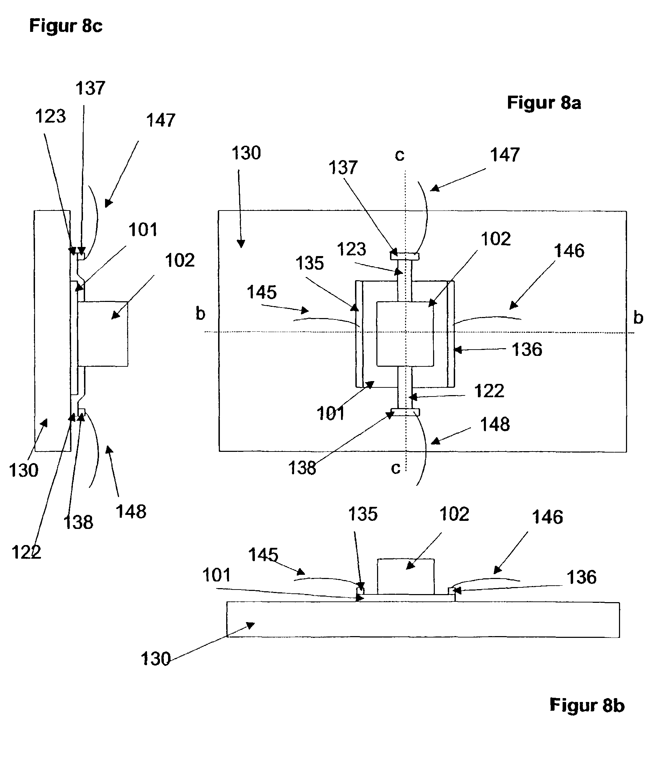

Die Figuren 8 zeigen nun eine schematische Darstellung einer realen Geometrie der Komponenten eines Mikrokalorimeters, das bei der erfindungsgemäßen Detektorvorrichtung als Detektoreinrichtung verwendet werden kann.

Dabei zeigt Figur 8a eine Draufsicht auf die Mikrokaloriemeteranordnung, Figur 8b eine Schnittansicht entlang der in Figur 8a dargestellten Linie b-b und Figur 8c eine Schnittansicht entlang der in Figur 8a dargestellten Linie c-c. Von oben nach unten betrachtet wird ein Thermometer (supraleitender Film) 101 über Kontaktierflächen aus Aluminium, sogenannte Aluminium-Bondpads 135,136 elektrisch kontaktiert und über supraleitende Drähte 145,146 mittels einer Ausleseelektronik, beispielsweise einer herkömmlichen Vorverstärkerelektronik, jedoch vorzugsweise mittels eines SQUID-Systems ausgelesen. Als Heizelemente sind Goldheizer 122,123 über einen elektrisch leitenden Absorber 102 verbunden. Sie werden über Aluminium-Bondpads 137, 138 elektrisch kontaktiert und über supraleitende Drähte 147,148 an eine Spannungsquelle (nicht dargestellt) angeschlossen. Die Goldheizer sind über ihre thermische Leitfähigkeit an das Thermometer 101 und den Absorber gekoppelt. Ein Substrat 130 bietet dabei eine Kopplung zur Kühleinrichtung.

Offenbart ist eine Detektorvorrichtung mit einem Kühlsystem, das aufweist: eine erste Kühleinrichtung zum Bereitstellen einer ersten Kühltemperatur, die ein zweistufiges Pulsröhrenkühlersystem aufweist, bei dem ein erster Pulsröhrenkühler einen zweiten Pulsröhrenkühler vorkühlt, und eine zweite Kühleinrichtung zum Bereitstellen einer zweiten Kühltemperatur, welche tiefer als die erste Kühltemperatur liegt, wobei die zweite Kühleinrichtung von der ersten Kühleinrichtung vorgekühlt wird. Ferner weist die Detektorvorrichtung eine Detektoreinrichtung zum Erfassen von Teilchen, Strahlung oder Feldern mit einem auf einem Tieftemperatureffekt basierenden Sensor auf, wobei die Detektoreinrichtung an die zweite Kühleinrichtung thermisch gekoppelt ist. Dadurch wird eine Detektorvorrichtung mit einem vergleichsweise einfach aufgebauten Kühlsystem geschaffen, wobei Sensoren betrieben werden können, die eine gute Energieauflösung haben und aufgrund des minimalen vorrichtungstechnischen Aufwands des Kühlsystems an quasi beliebigen Orten einsetzbar sind.

### Bezugszeichenliste

- 10: Kompressor
- 12: Leitung vom Kompressor weg
- 15: Rotationsventil
- 20: Pulsrohr, erstes Pulsrohr
- 22: warmer Wärmetauscher von 20
- 24: kalter Wärmetauscher, Kaltkopf von 20
- 26: Strömungswiderstand, Nadelventil zu 70
- 28: Ventil des zweiten Einlasses
- 30: zweites Pulsrohr
- 32: warmer Wärmetauscher von 30
- 34: kalter Wärmetauscher, Kaltkopf von 30
- 36: Strömungswiderstand, Nadelventil zu 70
- 38: Ventil des zweiten Einlasses
- 40: Regenerator, Regenerator der ersten Stufe
- 50: Regenerator der zweiten Stufe
- 60: Detektoreinrichtung
- 70: Ballastvolumen
- 80: Vakuumtopf
- 81: 67K-Schild
- 82: Magnet der zweiten Entmagnisierungsstufe
- 83: Salzpille der zweiten Entmagnisierungsstufe
- 84: 4K-Schild
- 85: Kevlaraufhängung
- 86: Spannvorrichtung
- 87: Wärmeschalter
- 90: Eintrittsfenster
- 91: Kryostat
- 92: Wärme-, Strahlungsschild
- 93: Vakuumisoliergefäß
- 94: Magnetschild
- 95: Kühlfinger
- 101: Thermometer (supraleitender Film)
- 102: Absorber
- 122,123: Goldheizer
- 130: Substrat
- 135,136: Aluminiumbondpads am Thermometer
- 137,138: Aluminiumbondpads am Goldheizer
- 145,146: supraleitende Auslesedrähte am Thermometer
- 147,148: supraleitende Drähte an dem Goldheizer
- T_{K}: erste Kühltemperatur
- T_{T}: zweite Kühltemperatur

## Patentansprüche

1. Detektorvorrichtung, die aufweist:
ein Kühlsystem mit:
einer ersten Kühleinrichtung (20,30) zum Bereitstellen einer ersten Kühltemperatur (T_{K}), die ein zweistufiges Pulsröhrenkühlersystem (20, 30) aufweist, bei dem ein erster Pulsröhrenkühler (20) einen zweiten Pulsröhrenkühler (30) vorkühlt, und
einer zweiten Kühleinrichtung (82,83,85,86,87) zum Bereitstellen einer zweiten Kühltemperatur (T_{T}), welche tiefer als die erste Kühltemperatur (T_{K}) liegt, wobei die zweite Kühleinrichtung von der ersten Kühleinrichtung vorgekühlt wird; und
eine Detektoreinrichtung (60) zum Erfassen von Teilchen, Strahlung oder Feldern mit einem auf einem Tieftemperatureffekt basierenden Sensor (101), wobei die Detektoreinrichtung an die zweite Kühleinrichtung thermisch gekoppelt ist.

2. Detektorvorrichtung nach Anspruch 1, dadurch gekennzeichnet, daß die erste Kühleinrichtung einen dritten oder weitere Pulsröhrenkühler aufweist.

3. Detektorvorrichtung nach Anspruch 2, dadurch gekennzeichnet, daß die Pulsröhrenkühler der ersten Kühleinrichtung derart angeordnet sind, daß sie in mehreren aufeinanderfolgenden Kühlstufen die erste Kühltemperatur (T_{K}) erreichen.

4. Detektorvorrichtung nach einem der Ansprüche 1 bis 3, dadurch gekennzeichnet, daß jeder der Pulsröhrenkühler (20,30) aufweist:
ein Pulsrohr (20,30), an dessen einem Ende ein kalter Wärmetauscher (24,34), an dem Wärme von außen aufgenommen wird, vorgesehen ist, und an dessen anderem Ende ein warmer Wärmetauscher (22,32), an dem Wärme nach außen abgegeben wird, vorgesehen ist;
einen Regenerator (40,50), der als Wärmezwischenspeicher dient; und
einen Druckoszillator (10,15), der dazu dient, periodische Druckänderungen zu erzeugen,
wobei das Pulsrohr (20,30) an dem Ende, an dem der kalte Wärmetauscher vorgesehen ist, über jeweilige Leitungen über den Regenerator (40,50) mit dem Druckoszillator (10,15) verbunden ist, so daß eine periodische Verschiebung eines Arbeitgases zwischen dem Pulsrohr und dem Druckoszillator ermöglicht wird.

5. Detektorvorrichtung nach Anspruch 4, dadurch gekennzeichnet, daß das Pulsrohr (20,30) an dem Ende, an dem der warme Wärmetauscher (22,32) vorgesehen ist, ferner einen Strömungswiderstand (26,36) und einen Behälter (70) zur Aufnahme eines Ballastvolumens aufweist.

6. Detektorvorrichtung nach Anspruch 5, dadurch gekennzeichnet, daß jeder der Pulsröhrenkühler (20,30) ferner eine Sekundärleitung aufweist, die sich von dem Ende des jeweiligen Pulsrohrs (20,30), an dem der warme Wärmetauscher (22,32) vorgesehen ist, zu der Leitung (12) zwischen dem Druckoszillator und dem Regenerator hin erstreckt und in diese mündet, wobei die Sekundärleitung einen variablen Strömungswiderstand (28,38) aufweist.

7. Detektorvorrichtung nach einem der Ansprüche 4 bis 6, dadurch gekennzeichnet, daß die zweite Kühleinrichtung (82,83,85,86,87) an oder in der Nähe des kalten Wärmetauschers (24,34) eines jeweiligen Pulsrohrs (20,30) angeordnet ist.

8. Detektorvorrichtung nach einem der Ansprüche 1 bis 7, dadurch gekennzeichnet, daß die Detektoreinrichtung (60) ferner einen Absorber (102) aufweist, der an den Sensor (101) thermisch gekoppelt ist und in dem einfallende Teilchen und Strahlung wechselwirken.

9. Detektorvorrichtung nach einem der Ansprüche 1 bis 8, gekennzeichnet ferner durch eine Heizeinrichtung (122,123), die an die Detektoreinrichtung thermisch gekoppelt ist.

10. Detektorvorrichtung nach einem der Ansprüche 1 bis 9, dadurch gekennzeichnet, daß der Sensor ein Phasenübergangsthermometer (101) aufweist.

11. Detektorvorrichtung nach einem der Ansprüche 1 bis 9, dadurch gekennzeichnet, daß der Sensor eine supraleitende Tunneldiode, wie beispielsweise eine SIS- oder NIS-Diode, aufweist.

12. Detektorvorrichtung nach einem der Ansprüche 1 bis 9, dadurch gekennzeichnet, daß der Sensor einen Thermistor, wie beispielsweise einen NTD-Thermistor, aufweist.

13. Detektorvorrichtung nach einem der Ansprüche 1 bis 9, dadurch gekennzeichnet, daß der Sensor ein magnetisches Bolometer aufweist.

14. Detektorvorrichtung nach einem der Ansprüche 1 bis 13, dadurch gekennzeichnet, daß die Detektoreinrichtung (60) eine Vielzahl von Sensoren aufweist.

15. Detektorvorrichtung nach einem der Ansprüche 8 bis 14, dadurch gekennzeichnet, daß der Absorber (102) aus einem Dielektrikum oder einem Halbleiter oder einem Metall oder einem Halbmetall oder einer Halbmetallegierung oder einem Supraleiter oder aus einer Kombination der einzelnen Materialien besteht.

16. Detektorvorrichtung nach einem der Ansprüche 1 bis 15, dadurch gekennzeichnet, daß die zweite Kühleinrichtung eine Entmagnetisierungsstufe (82,83,85,86,87) oder einen ³He/⁴He-Entmischungskühler oder einen ³He-Kühler oder eine mechanische Kühleinrichtung wie einen Helium-Kompressorkühler oder eine elektrische Kühleinrichtung wie ein Peltierelement oder eine supraleitende Tunneldiode wie eine NIS-Diode aufweist.

17. Detektorvorrichtung nach einem der Ansprüche 1 bis 15, dadurch gekennzeichnet, daß die zweite Kühleinrichtung eine Entmagnetisierungsstufe (82,83,85,86,87) hat, welche aufweist:
eine Salzpille (83), die von einem Magnet (82) umgeben ist; und
einen Wärmeschalter (87) zum thermischen Koppeln oder Abkoppeln der Salzpille zu/von dem Magneten während des Betriebs der Entmagnetisierungsstufe.

18. Detektorvorrichtung nach einem der Ansprüche 1 bis 17, dadurch gekennzeichnet, daß das Kühlsystem Teil eines Kryostaten (91) ist, in dem die Detektoreinrichtung (60) untergebracht ist, wobei der Kryostat (91) ferner eine Eintrittsöffnung (90) zum Durchlassen der zu untersuchenden Teilchen und Strahlung vom Äußeren des Kryostaten in das Innere des Kryostaten zu der Detektoreinrichtung (60) aufweist.

19. Detektorvorrichtung nach Anspruch 18, dadurch gekennzeichnet, daß der Kryostat eine Fokussierungseinrichtung wie eine Röntgenlinse oder eine Wolter-Anordnung oder eine Fresnellinse oder fokussierende Röhrenbündel oder elektrische Fokussierungseinrichtungen/Defokussierungseinrichtungen oder magnetische Fokussierungseinrichtungen/Defokussierungseinrichtungen aufweist.
